Europäisches Patentamt

European Patent Office

Office européen des brevets

(11) Veröffentlichungsnummer: **0 247 344**
**A2**

# EUROPÄISCHE PATENTANMELDUNG

(21) Anmeldenummer: 87105590.1

(22) Anmeldetag: 15.04.87

(51) Int. Cl.⁴: **B 29 C 51/14**

(30) Priorität: 29.04.86 DE 3614566

(43) Veröffentlichungstag der Anmeldung: 02.12.87
Patentblatt 87/49

(84) Benannte Vertragsstaaten: **AT DE ES FR GB IT NL SE**

(71) Anmelder: **DYNAMIT NOBEL AKTIENGESELLSCHAFT,
Postfach 1261, D-5210 Troisdorf, Bez. Köln (DE)**

(72) Erfinder: **Klaar, Karlo, Bergischer Ring 11,
D-5210 Troisdorf-Sieglar (DE)**
Erfinder: **Spielau, Paul, Dr., Van-Gogh-Platz 10,
D-5210 Troisdorf-Eschmar (DE)**
Erfinder: **Breitscheidel, Hans-Ulrich,
Kapellenstrasse 43a, D-5200 Siegburg (DE)**

(54) Verfahren zur Herstellung mehrschichtiger Formteile.

(57) Es wird ein Verfahren beschrieben zur Herstellung mehrschichtiger Formteile mit einem Trägerteil auf der Basis von Polypropylen und einem Elastomer-Schaumstoff, wobei in einem Arbeitsgang die Kaschierung des Schaumstoffs mit dem Trägerteil und die Formgebung erfolgt.

ɬ

Troisdorf, den 9. März 1987
OZ 86016 Wu/Bd

DYNAMIT NOBEL AKTIENGESELLSCHAFT
Troisdorf Bez. Köln

# Verfahren zur Herstellung mehrschichtiger Formteile

Die Erfindung betrifft ein Verfahren zur Herstellung mehrschichtiger Formteile gemäß dem Oberbegriff des Anspruchs 1.

Mehrschichtige Formteile aus Polypropylenplatten und Schaumstoffen sind bekannt. Sie werden insbesondere im Automobilbau eingesetzt als schalldämpfende Abdeckungen oder Abkapselungen, insbesondere im Motorbereich.

Ein gattungsgemäßes Verfahren zur Herstellung mehrschichtiger Formteile ist aus der DE-OS 23 03 481 bekannt. Nach diesem Verfahren kann ein Trägerteil, z.B. aus glasfaserverstärktem Polypropylen, mit Hartschaumstoffen bei relativ geringen Preßdrücken von 3 bis 20 bar verbunden und geringfügig verformt werden.

Aus der DE-OS 25 45 700 ist ein ähnliches Verfahren bekannt, bei dem ein Trägerteil aus z.B. glasfaserverstärktem Polypropylen und ein thermoplastischer Schaumstoff jeweils auf ihre Umformtemperatur erwärmt und zusammen in einer Presse verformt und miteinander verbunden werden. Dieses Verfahren ist jedoch nur für Drücke unter 2 bar anwendbar, wobei trotz dieser geringen Drücke eine irreversibele Schädigung des thermoplastischen Schaumstoffs nicht vermieden werden kann.

- 2 -

Bei diesen bekannten Verfahren lassen sich nur sehr geringe Verformungen des Trägerteils erreichen. Insbesondere können keine Formteile hergestellt werden, bei denen das Trägerteil dreidimensionale Verformungen mit engen Radien, Rippen oder unterschiedliche Wandstärken aufweist. Es besteht jedoch ein großer Bedarf an mehrschichtigen Formteilen mit einem Trägerteil auf der Basis von Polypropylen, insbesondere glasfaserverstärktem Polypropylen, mit einer Schaumstoffschicht, wobei das Trägerteil entsprechend dem Einsatzzweck auch stärkere Verformungen aufweist.

Nach dem Stand der Technik werden derartige mehrschichtige Formteile hergestellt, indem eine Platte aus Polypropylen, insbesondere auch glasmattenverstärktem Polypropylen, in einer Formpresse unter Druck und bei einer Temperatur von 190° bis 200°C durch Form- oder Fließpressen zu einem einschichtigen Polypropylen-Formteil geformt wird, wonach dieses mit einem ebenfalls fertig geformten Schaumstoff-Formteil, z.B. aus Polyurethan-Schaumstoff, durch Kleben zu dem mehrschichtigen Formteil verbunden wird.

Trotz der mit dem Kleben verbundenen Nachteile wie mangelnde Haftfestigkeit, Chemikalien- und Wasserfestigkeit der Klebverbindung konnte bislang noch kein Verfahren gefunden werden, Schaumstoffe und Polypropylen-Formteile unter stärkerer Verformung des Trägerteils ohne Kleben vollflächig haftfest miteinander zu verbinden. Zudem ist für das Kleben ein zusätzlicher Arbeitsschritt erforderlich. Aufgabe der Erfindung ist es, ein Formteil aus einem Polypropylen-Zuschnitt und einem Schaumstoff-Zuschnitt oder -Formteil herzustellen, wobei dem Verformungsgrad des Trägerteils keine engen Grenzen gesetzt sind und wobei der vollflächige Verbund ohne Anwendung von Klebstoffen einfach und haftfest erfolgen soll.

- 3 -

Die Erfindung löst diese Aufgabe durch ein Verfahren gemäß dem Anspruch 1, vorteilhaft in Verbindung mit den weiteren Ansprüchen.

Es hat sich überraschend herausgestellt, daß ein Elastomer-Schaumstoff-Zuschnitt bzw. ein Elastomer-Schaumstoff-Formteil trotz der verwendeten hohen Drücke - beim Formpressen etwa 20 bar bis 40 bar und bis 120 bar beim Fließpressen - nicht geschädigt wird, so daß er nach dem Verpressen seine ursprüngliche Form und Rückstellfähigkeit beibehält. Die Haftfestigkeit zwischen Elastomer-Schaumstoff und dem Polypropylen-Träger ist ohne Verwendung von Klebstoffen oder Haftvermittlern ausreichend für die meisten Anwendungszwecke, gleichzeitig ist die Verbindung chemikalien- und wasserfest.

Als Ausgangsmaterial für die verwendeten Elastomer-Schaumstoffe haben sich insbesondere Polyurethan-Elastomer-Schäume, insbesondere auf Basis von Polyesterurethanen und Polyetherurethanen als besonders geeignet erwiesen.

Der Elastomer-Schaumstoff weist bevorzugt ein Raumgewicht von 20 bis 100 kg/m$^3$, insbesondere von 23 bis 50 kg/m$^3$ auf. Die Dicke der Elastomer-Schaumstoff-Schicht beträgt bevorzugt 5 bis 50 mm.

Unter Polypropylen im Sinne dieser Erfindung werden auch Mischungen mit anderen Polymeren sowie Copolymere auf der Basis von Polypropylen verstanden, jeweils ggf. mit weiteren Hilfs- und Zusatzstoffen, insbesondere mit Glasfasern oder Glasfasermatten.

0247344

- 4 -

Es können gemäß der Erfindung auch mehrere Polypropylen-Platten-Zuschnitte ganz oder teilweise überdeckend in die Preßform eingelegt werden.

Überraschend hat sich herausgestellt, daß bei Verwendung von Polypropylen, welches ein Vernetzungsmittel enthält, jedoch noch nicht wesentlich vernetzt ist, ein besonders haftfester Verbund erreicht wird. Insbesondere ein Polypropylen mit einem anfänglichen Vernetzungsgrad unter 5 % gemäß der DE-OS 33 27 149 hat sich dabei bewährt.

Die Vernetzung des Polypropylens erfolgt vorteilhaft durch Warmlagerung des fertigen mehrschichtigen Formteils in Anwesenheit von Feuchtigkeit, insbesondere bei erhöhten Temperaturen bis 140°C. Der Vernetzungsgrad wird bestimmt durch die Prozentangabe des Dekalinunlöslichen, d.h. durch 20 Stunden langes Erhitzen in siedendem Dekalin wird unter Rückfluß der Gehalt an unlöslichem Gel des vernetzten Materials bestimmt.

Vorteilhaft werden als Schäume Elastomer-Formteile bzw. Elastomer-Zuschnitte eingesetzt, die ein- oder beidseitig verhautet sind. Die so hergestellten mehrschichtigen Formteile sind auch an der Schaumstoff-Oberfläche wasserabweisend.

Das erfindungsgemäße Verfahren zur Herstellung mehrschichtiger Formteile führt - insbesondere bei Verwendung vernetzbarer Polypropylen-Trägerplatten - zu wärmeformbeständigen Verbundteilen, wobei der Elastomerschaum mit dem Polypropylen-Träger haftfest, chemikalien- und wasserfest verbunden ist. Gleichzeitig stellt dieses Verfahren im Vergleich zu den bekannten Klebeverfahren mit getrennter Formgebung eine erhebliche Einsparung an Arbeitsschritten und damit Kosten dar.

Mit dem erfindungsgemäßen Verfahren können Formteile hergestellt werden, dessen Trägerteil auch größere Verformungen aufweist. Insbesondere können dreidimensionale Verformungen mit engen Krümmungsradien, sowie Rippen und sehr unterschiedliche Wanddicken realisiert werden.

Bei der Herstellung mehrschichtiger Formteile können Verformungsdrücke zwischen 20 und 40 bar eingesetzt werden, um eine Formpressung zu erreichen.

Die besonderen Vorteile des erfindungsgemäßen Verfahrens ergeben sich jedoch insbesondere bei höheren Drücken von 50 bis 120 bar, bei denen bei der Verformung das Trägerteil fließgepreßt wird. Bei diesen sehr hohen Preßdrücken können mehrschichtige Formteile hergestellt werden, deren Trägerteil auch komplizierte Oberflächenformen, insbesondere Rippen etc. aufweist mit engen Krümmungsradien, sehr unterschiedlichen Wandstärken usw.

Das erfindungsgemäße Verfahren wird im folgenden anhand von Ausführungsbeispielen sowie der Figur erläutert.

Beispiel 1

Ein ebener, ca. 1,7 mm starker Zuschnitt eines glasmattenverstärkten, vernetzbarem Polypropylen-Trägers mit einem Glasgehalt vom 35 % und einem Vernetzungsgrad unter 5 % wird in einem Infrarot-Durchlauftaktofen auf eine Temperatur von 200°C erwärmt. Das für den Polypropylen-Träger verwendete vernetzbare Polypropylen entspricht dem Beispiel 1 der DE-OS 33 27 140. Der erwärmte Träger-Zuschnitt wird anschließend zusammen mit einem vorgeformten, verhauteten Polyurethan-Elastomer-Schaumstoffteil mit einer Temperatur, die der Umgebungstemperatur entspricht, in eine schnellschließende Presse gelegt. Der Polyurethan-Elastomer-Schaumstoff auf der Basis von Polyesterurethanen wies ein Raumgewicht von 30 kg/m³ bei einer mittleren Dicke von 18 mm auf. Der mit dem Polypropylen-Träger in Berührung stehende Formstempel war dabei auf 70°C temperiert, während der obere Formstempel eine Temperatur von 30°C aufwies.

Die Presse wurde unmittelbar nach dem Einlegen der Zuschnitte mit einer Geschwindigkeit von ca. 600mm/s geschlossen. Bei einem Druck von ca. 30 bar und ca. 15 s Preßdauer wurde der Verbund formgepreßt, wobei das Polypropylen-Trägerteil die Kontur der Formstempel annahm. Nach dem Entformen stellte sich der Elastomer-Schaumstoff vollständig zurück. Die Kaschierfestigkeit übertraf die Eigenfestigkeit des Polyurethan-Schaumes. Anschließend wurde das Polypropylen-Trägerteil des mehrschichtigen Formteils durch Warmlagerung bei 140°C in Feuchtraum-Atmosphäre über 3 Stunden ausvernetzt, der Vernetzungsgrad betrug ca. 50 %.

Beispiel 2

Ein ebener Zuschnitt eines glasmattenverstärkten, vernetzbaren Polypropylenträgers einer Stärke von 3,4 mm, einem Glasgehalt von 40 % und einem Vernetzungsgrad unter 5 % wurde wie im Beispiel 1 temperiert und zusammen mit einem nicht vorgewärmten Polyurethan-Elastomer-Schaumstoffteil in eine schnellschließende Presse gelegt. Der Polyurethan-Elastomer-Schaumstoff auf der Basis von Polyetherurethanen wies eine Dicke von 25 mm bei einem Raumgewicht von 32 kg/m$^3$ auf. Durch anschließendes Verpressen bei 90 bar über einen Zeitraum von 25 s wurde der Verbund fließgepreßt, wobei das Polypropylen-Trägerteil die Preßform vollständig ausfüllte. Nach dem Entformen konnte keine Schädigung des Polyurethan-Elastomer-Schaumstoffes festgestellt werden. Anschließend erfolgte die Vernetzung des Polypropylens wie in Beispiel 1.

Beispiel 3

Zwei ebene Zuschnitte eines glasfaserverstärkten, vernetzbaren Polypropylenträgers einer Stärke von 1,7 mm, einem Glasgehalt von 35 % und einem Vernetzungsgrad unter 5 % wurde wie im Beispiel 1 temperiert und zusammen mit einem nicht vorgewärmten Polyurethan-Elastomer-Schaumstoffteil in eine schnellschließende Presse gelegt. Der Polyurethan-Elastomer-Schaumstoff auf der Basis von Polyetherurethanen wies eine Dicke von 30 mm bei einem Raumgewicht von 35 kg/m$^3$ auf. Durch anschließendes Verpressen bei 110 bar über einen Zeitraum von 20 s wurde der Verbund fließgepreßt, wobei das Polypropylen-Trägerteil die Preßform vollständig ausfüllte. Nach dem Entformen konnte keine Schädigung des Polyurethan-Elastomer-Schaumstoffes festgestellt werden. Anschließend erfolgte die Vernetzung des Polypropylens wie in Beispiel 1.

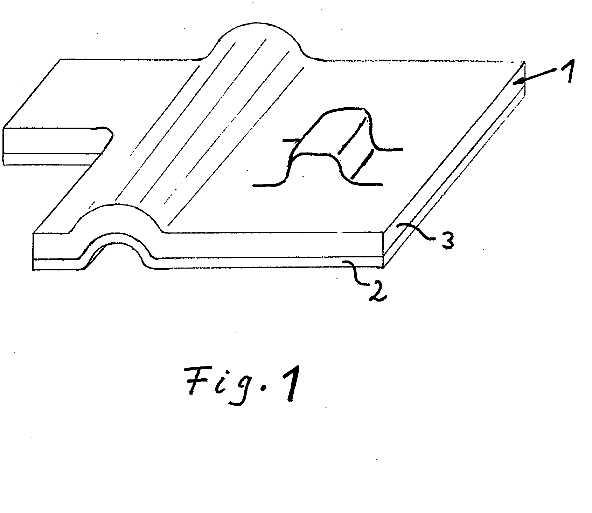

Die Figur 1 zeigt ein mehrschichtiges Formteil 1 gemäß der Erfindung mit einem fließgepreßten Polypropylen-Träger 2 und einem Polyurethan-Elastomer-Schaumstoff auf Polyether-Basis 3, wie er gemäß Beispiel 2 hergestellt wurde.

Patentansprüche

1. Verfahren zur Herstellung mehrschichtiger Formteile mit einem Trägerteil auf der Basis von Polypropylen und mit einer Schaumstoffschicht,

   - bei dem als Trägerteil ein im wesentlichen ebener Zuschnitt einer Bahn oder Platte auf Basis von Polypropylen auf eine Temperatur von 180 bis 220°C erwärmt,

   - dieser erwärmte Zuschnitt und eine nicht vorgewärmte Schaumstoffschicht in Gestalt eines flächigen Zuschnittes oder Formteiles in eine Presse mit einer oberen und einer unteren Formwerkzeughälfte eingelegt

   - und das Trägerteil und die Schaumstoffschicht unter Druck gleichzeitig zu dem mehrschichtigen Formteil geformt und haftfest miteinander verbunden wird,

   d a d u r c h   g e k e n n z e i c h n e t , daß für die Schaumstoffschicht ein Elastomer-Schaumstoff verwendet wird und mit einem Druck von etwa 20 bis 120 bar verformt wird.

2. Verfahren nach Anspruch 1, dadurch gekennzeichnet, daß der Zuschnitt für das Trägerteil aus einem ein Vernetzungsmittel enthaltenden, vernetzbaren, im wesentlichen noch unvernetzten Polypropylen gefertigt ist und daß nach dem Entformen des mehrschichtigen Formteils durch Lagerung, ggf. bei erhöhten Temperaturen bis 140°C, in Anwesenheit von Feuchtigkeit das Polypropylen ausvernetzt wird.

3. Verfahren nach einem der Ansprüche 1 oder 2, dadurch gekennzeichnet, daß das Trägerteil aus einem glasmattenverstärkten Polypropylen mit einem Glasfasergehalt zwischen 20 und 60 Gew.-% gefertigt ist.

4. Verfahren nach einem der Ansprüche 1 bis 3, dadurch gekennzeichnet, daß die Formwerkzeughälften auf unterschiedliche Temperaturen temperiert werden, wobei die Formwerkzeughälfte, an der das Trägerteil beim Verformen anliegt, eine um wenigstens $20^0$C höhere Temperatur aufweist als die Formwerkzeughälfte, an der die Schaumstoffschicht anliegt.

5. Verfahren nach einem der Ansprüche 1 bis 4, dadurch gekennzeichnet, daß die Formwerkzeughälte, an der das Trägerteil beim Verformen anliegt, eine Temperatur von etwa 50 bis $80^0$C aufweist.

6. Verfahren nach einem der Ansprüche 1 bis 5, dadurch gekennzeichnet, daß als Elastomer-Schaumstoff ein offenzelliger Weich-Polyurethan-Schaumstoff eingesetzt wird.

7. Verfahren nach Anspruch 6, dadurch gekennzeichnet, daß als Elastomer-Schaumstoff ein Polyesterurethan-Schaumstoff oder ein Polyetherurethan-Schaumstoff mit einem Raumgewicht von 20 bis 100 kg/m$^3$, vorzugsweise 23 bis 50 kg/m$^3$ eingesetzt wird.

8. Verfahren nach einem der Ansprüche 1 bis 7, dadurch gekennzeichnet, daß Zuschnitte aus Elastomer-Schaumstoff mit einer Dicke von 5 bis 50 mm eingesetzt werden.

9. Verfahren nach einem der Ansprüche 1 bis 8, dadurch gekennzeichnet, daß eine Elastomer-Schaumstoffschicht mit einer ein- oder beidseitigen Oberflächenversiegelung, insbesondere in Form einer sehr dünnen, kompakten, durch oberflächiges Anschmelzen des Schaumstoffs erzeugten Haut eingesetzt wird.

10. Verfahren nach einem der Ansprüche 1 bis 9, dadurch gekennzeichnet, daß für das Trägerteil Zuschnitte einer Dicke von etwa 1 bis 5 mm eingesetzt werden.

11. Verfahren nach einem der Ansprüche 1 bis 10, dadurch gekennzeichnet, daß zur Bildung des Trägerteiles mehrere Zuschnitte auf der Basis von Polypropylen, insbesondere nach dem Vorwärmen, aufeinandergeschichtet und in das Formwerkzeug eingelegt werden.

12. Verfahren nach einem der Ansprüche 1 bis 11, dadurch gekennnzeichnet, daß die Zuschnitte auf der Basis von Polypropylen zusammen mit Zuschnitten oder Formteilen aus Elastomer-Schaumstoff bei einem Druck von 20 bis 40 bar formgepreßt werden.

13. Verfahren nach einem der Ansprüche 1 bis 11, dadurch gekennzeichnet, daß Zuschnitte auf der Basis von Polypropylen zusammen mit Zuschnitten oder Formteilen aus Elastomer-Schaumstoff bei einem Druck von 50 bis 120 bar fließgepreßt werden.

Fig. 1